(19) Europäisches Patentamt
European Patent Office
Office européen des brevets

(11) **EP 3 989 199 A1**

(12) **EUROPEAN PATENT APPLICATION**
published in accordance with Art. 153(4) EPC

(43) Date of publication:
**27.04.2022 Bulletin 2022/17**

(21) Application number: **20826872.2**

(22) Date of filing: **18.06.2020**

(51) International Patent Classification (IPC):
**G08G 1/00** (2006.01)

(52) Cooperative Patent Classification (CPC):
**G08G 1/00**

(86) International application number:
**PCT/JP2020/024003**

(87) International publication number:
**WO 2020/256070 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.06.2019 JP 2019115911**

(71) Applicant: **Aichi Steel Corporation
Tokai-shi, Aichi 476-8666 (JP)**

(72) Inventors:
• **YAMAMOTO Michiharu
Tokai-shi, Aichi 476-8666 (JP)**
• **NAGAO Tomohiko
Tokai-shi, Aichi 476-8666 (JP)**
• **AOYAMA Hitoshi
Tokai-shi, Aichi 476-8666 (JP)**

(74) Representative: **Viering, Jentschura & Partner
mbB
Patent- und Rechtsanwälte
Am Brauhaus 8
01099 Dresden (DE)**

(54) **CONTROL METHOD AND CONTROL SYSTEM FOR VEHICLE**

(57)     A control system (1) for letting a vehicle travel by automatic steering is a system which includes a vehicle control part (112) which controls the vehicle so that a subject point set for the vehicle passes through a predetermined route, a subject-point selection processing part (113) which selects a subject point, and a subject-point updating processing part (114) which updates the subject point as a control subject as appropriate by setting the subject point newly selected by the subject-point selection processing part (113) as the control subject, and a highly-versatile system capable of automatic steering irrespective of the type of the vehicle or the shape of the route.

[FIG.1]

EP 3 989 199 A1

**Description**

TECHNICAL FIELD

The present invention relates to a control method and control system for letting a vehicle travel by automatic steering.

BACKGROUND ART

Conventionally, a car navigation system has been known in which, for example, GPS waves are received to measure a vehicle position and the vehicle is guided to a destination set in advance (refer to, for example, Patent Literature 1 mentioned below). According to driving assist control such as voice output for guiding a route, it is possible to efficiently arrive at the destination without losing the route even during movement in an unfamiliar area.

Furthermore, for example, there is also a suggestion of a driving assist system using 3D map data which three-dimensionally represents a road environment including peripheral environments such as surrounding buildings, guardrails, signs, and curbs. According to this driving assist system, for example, by mapping an own vehicle position on the 3D map data, it is possible to achieve sophisticated driving assist including automatic driving. If automatic driving becomes possible, load of driving the vehicle can be reduced.

CITATION LIST

PATENT LITERATURE

Patent Literature 1: Japanese Unexamined Patent Application Publication No. 2001-264076

SUMMARY OF INVENTION

TECHNICAL PROBLEM

However, the above-described vehicular systems have the following problems. That is, there are problems in which an appropriate traveling route varies in accordance with the type of a vehicle as a control subject, the shape of a traveling road, and so forth, and it is not easy to achieve highly-versatile control specifications.

The present invention was made in view of the above-described conventional problems, and is to provide a highly-versatile automatic-steering control method and control system.

SOLUTION TO PROBLEM

One mode of the present invention resides in a vehicular control method for letting a vehicle travel by automatic steering, the control method executing:

    a traveling control process of controlling the vehicle so that a subject point set for the vehicle passes through a predetermined route;
    a subject-point selection process of selecting a new subject point set as the subject point; and
    a subj ect-point updating process of updating the subj ect point as a control subject of the traveling control process to the new subject point selected by the subject-point selection process.

One mode of the present invention resides in a vehicular control system for letting a vehicle travel by automatic steering, the control system including:

    a vehicle control part which controls the vehicle so that a subject point set for the vehicle passes through a predetermined route;
    a subject-point selection processing part which selects a new subject point set as the subject point; and
    a subject-point updating processing part which updates the subject point as a control subject of the vehicle control part to the new subject point selected by the subject-point selection processing part.

Advantageous Effects of Invention

The vehicle control method and control system according to the present invention are a control method and so forth which let the vehicle travel by automatic steering so that the subject point set for the vehicle passes through the predetermined route. The present invention has one of technical features in selecting the new subject point set as the subject point as the control subject and updating the subject point.

In the control method and so forth according to the present invention, by updating the subject point as a control subject, the route where the vehicle actually travels can be adjusted. In the present invention, to adjust the actual traveling route, it is less necessary to change the control specifications. In this manner, the control method and control system according to the present invention are highly-versatile control method and control system which can adjust the traveling route of the vehicle without greatly changing the control specifications.

BRIEF DESCRIPTION OF DRAWINGS

FIG. 1 is a descriptive diagram of an automatic driving system.
FIG. 2 is a descriptive diagram of a magnetic marker.
FIG. 3 is a front view of an RFID tag.
FIG. 4 is a block diagram depicting a system configuration on a vehicle side.
FIG. 5 is a descriptive diagram exemplarily depicting temporal changes of a magnetic measurement value in a forwarding direction at the time of passing over the magnetic marker.
FIG. 6 is a descriptive diagram exemplarily depicting a distribution of magnetic measurement values in a vehicle-width direction measured by magnetic sensors Cn arrayed in the vehicle-width direction.
FIG. 7 is a descriptive diagram of operation of the automatic driving system.
FIG. 8 is a descriptive diagram of a method of identifying an own vehicle position.
FIG. 9 is a descriptive diagram depicting deviation ΔD of a subject point (own vehicle position) with respect to a target route.
FIG. 10 is a descriptive diagram of control when a subject point at the center in the vehicle-width direction is selected.
FIG. 11 is a descriptive diagram of an example of control when a leftward subject point is selected.
FIG. 12 is a graph indicating a relation between curvature and correction coefficient D1.
FIG. 13 is a graph indicating a relation between a wheel base and correction coefficient D2.
FIG. 14 is a descriptive diagram of an inner wheel difference when a subject point at the center in the vehicle-width direction is selected.
FIG. 15 is a descriptive diagram of an inner wheel difference when a leftward subject point is selected.
FIG. 16 is a descriptive diagram of a subject-point selection process at the time of passing through a steep curve.
FIG. 17 is a diagram exemplarily depicting a setting screen for setting a preferred vehicle position.
FIG. 18 is a descriptive diagram of a subject-point selection process when an obstacle is evaded.
FIG. 19 is a descriptive diagram of a subject-point selection process at the time of lane change.

DESCRIPTION OF EMBODIMENTS

Modes of the present invention are specifically described by using the following embodiments.

(First Embodiment)

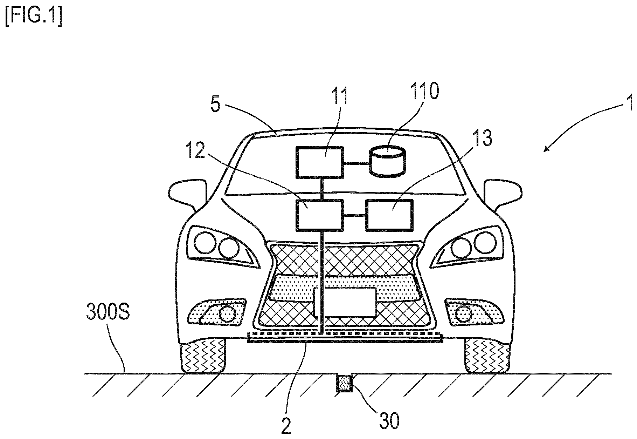

The present embodiment is an example regarding a control method and control system for letting vehicle 5 travel along a target route set in advance (one example of a predetermined route) . Details of this are described by using FIG. 1 to FIG. 19.

Automatic driving system 1 as one example of a control system is configured to include, as in FIG. 1, sensor unit 2 which performs magnetic detection and so forth, tag reader 13 which obtains marker position information indicating a laying position of magnetic marker 30, positioning unit 12 which identifies an own vehicle position, traveling control unit 11 which controls traveling of vehicle 5, and so forth. Traveling control unit 11 can refer to a storage area of map database (map DB) 110 which stores detailed three-dimensional map data (3D map data).

In the following, (1) magnetic marker 30 to be laid in a road is generally described, and then details of (2) sensor unit 2, (3) tag reader 13, (4) positioning unit 12, and (5) traveling control unit 11 are described.

(1) Magnetic Marker

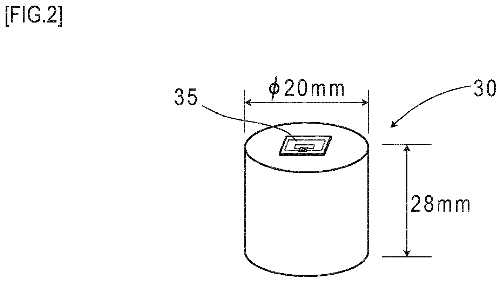

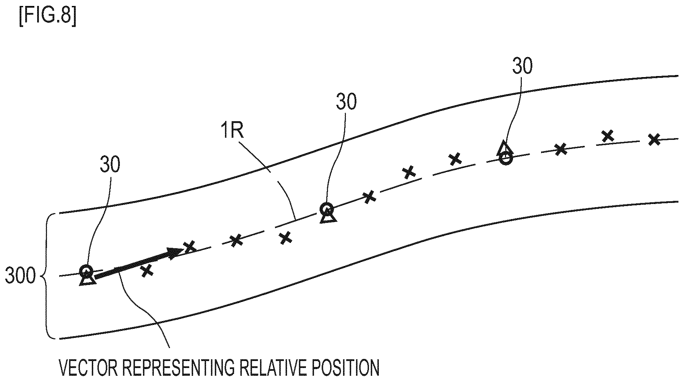

Magnetic marker 30 is, as in FIG. 1 and FIG. 2, a road marker to be laid in road surface 300S of the road. Magnetic markers 30 are arranged along the center of a lane (sign 300 in FIG. 8, traveling road) sectioned by left and right lane marks with pitches of, for example, 10 meters.

The magnetic marker 30 has a columnar shape having a diameter of 20 mm and a height of 28 mm. This magnetic marker 30 is laid in a state of being accommodated in a hole provided in road surface 300S. A magnet forming magnetic marker 30 is a ferrite plastic magnet with magnetic powder of iron oxide as a magnetic material dispersed in a polymer material as a base material. The maximum energy product (BHmax) of this magnet is 6.4 kJ/square m.

Specifications of magnetic marker 30 of the present embodiment are partially depicted in Table 1.

[Table 1]

| Type of magnet | Ferrite plastic magnet |
|---|---|
| Diameter | $\phi$ 20 mm |
| Height | 28 mm |
| Magnetic flux density Gs at the surface | 45 mT |

Magnetic marker 30 acts with magnetism of a magnetic flux density of 8 $\mu$T (microtesla) at an upper-limit height of 250 mm in a range from 100 mm to 250 mm assumed as an attachment height of sensor unit 2. Also, in this magnetic marker 30, a magnetic flux density Gs of the surface indicating a magnetic strength on the surface is 45 mT.

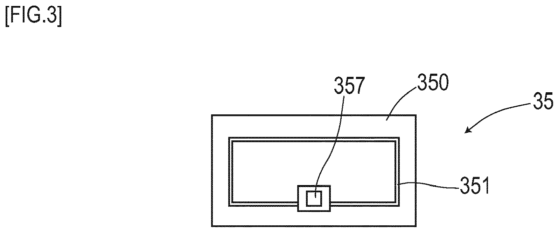

In magnetic marker 30 of the present embodiment, as in FIG. 2 and FIG. 3, RFID (Radio Frequency IDentification) tag 35 which wirelessly outputs information is attached to an end face serving as an upper surface. RFID tag 35, operates by wireless external power feeding and transmits position data, which is marker position information indicating the laying position of magnetic marker 30.

Here, as described above, magnetic marker 30 is the magnet with magnetic powder of iron oxide dispersed in the polymer material. This magnet has low conductivity and is hard to cause eddy current or the like at the time of wireless power feeding. Therefore, RFID tag 35 annexed to magnetic marker 30 can efficiently receive wirelessly-transmitted power.

RFID tag 35 is an electronic component having IC chip 357 implemented on a surface of tag sheet 350 (FIG. 3) cut out from, for example, a PET (Polyethylene terephthalate) film. On the surface of tag sheet 350, a printed pattern of loop coil 351 is provided. Loop coil 351 achieves a function as a receiving coil to generate an exciting current by external electromagnetic induction and a function as a transmission antenna for wirelessly transmitting position data and so forth.

(2) Sensor Unit

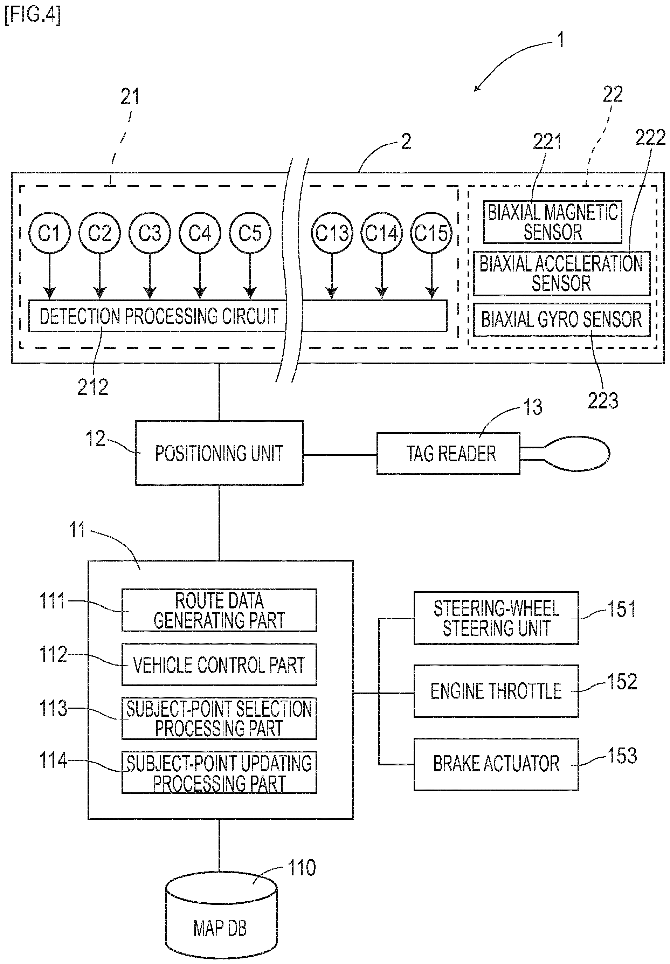

Sensor unit 2 is, as in FIG. 1 and FIG. 4, a rod-shaped unit having magnetic sensor array 21 as a magnetic detecting part and IMU (Inertial Measurement Unit) 22 for use in inertial navigation integrated together. Sensor unit 2 is attached so as to face road surface 300S in a state of being along a vehicle-width direction. Sensor unit 2 attached to, for example, the inside of a front bumper of vehicle 5 or the like, has an attachment height of 200 mm with reference to road surface 300S.

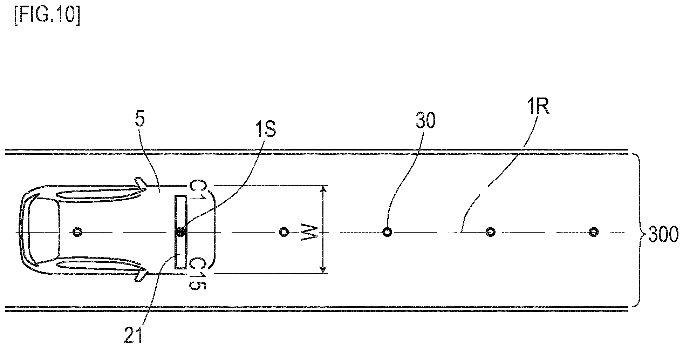

Magnetic sensor array 21 (FIG. 4) includes fifteen magnetic sensors Cn (n is an integer of 1 to 15) arrayed on one straight line and detection processing circuit 212 having a CPU and so forth not depicted incorporated therein. In rod-shaped sensor unit 2, fifteen magnetic sensors Cn configuring magnetic sensor array 21 are arrayed with 10-centimeter pitches along a longitudinal direction. When magnetic sensor array 21 is attached along the vehicle-width direction of vehicle 5, fifteen magnetic sensors Cn are arrayed along the vehicle-width direction. In the configuration of the present embodiment, magnetic sensor C1 is positioned on the left side (driver's seat side in a left-hand vehicle) of vehicle 5, and magnetic sensor C15 is positioned on the right side (passenger's seat side) of vehicle 5 (refer to FIG. 10) .

Magnetic sensors Cn are sensors which detect magnetism by using the known MI effect (Magnet Impedance Effect) in which impedance of a magneto-sensitive body such as an amorphous wire sensitively changes in response to an external magnetic field. Magnetic sensors Cn have magnetic sensitivity in the longitudinal direction of the amorphous wire.

In magnetic sensors Cn of the present embodiment, magneto-sensitive bodies, not depicted, such as amorphous wires are arranged along two orthogonal axial directions. According to magnetic sensors Cn, magnetism acting on the two orthogonal axial directions can be detected. Note that in sensor unit 2 of the present embodiment, magnetic sensors Cn are incorporated so as to be able to detect magnetic components in a forwarding direction and the vehicle-width direction in a state of being attached to vehicle 5.

Magnetic sensors Cn are highly-sensitive sensors having a measurement range of the magnetic flux density of ±0.6 mT and a magnetic flux resolution of 0.02 $\mu$T within the measurement range. In the present embodiment, a frequency of magnetic measurement by each magnetic sensor Cn of sensor unit 2 is set at 3 kHz so as to support high-speed vehicle traveling.

Specifications of magnetic sensor Cn are partially depicted in Table 2.

[Table 2]

| | |
|---|---|
| Measurement range | $\pm$0.6 mT |
| Magnetic flux resolution | 0.02 $\mu$T |
| Sampling frequency | 3 kHz |

As described above, magnetic marker 30 can act with magnetism having the magnetic flux density equal to or larger than 8 $\mu$T in the range from 100 mm to 250 mm assumed as the attachment height of magnetic sensors Cn. Magnetic marker 30 acting with magnetism having the magnetic flux density equal to or larger than 8 $\mu$T can be detected with high reliability by using magnetic sensors Cn having the magnetic flux resolution of 0.02 $\mu$T.

Detection processing circuit 212 (FIG. 4) of magnetic sensor array 21 is an arithmetic circuit which performs marker detection process for detecting magnetic marker 30 (FIG. 1). This detection processing circuit 212 is configured by using a CPU (central processing unit) which performs various calculations, memory elements such as a ROM (read only memory) and a RAM (random access memory), and so forth.

Detection processing circuit 212 obtains a sensor signal outputted from each of magnetic sensors Cn at the frequency of 3 kHz to perform marker detection process. Detection processing circuit 212 inputs detection result of the marker detection process to positioning unit 12. Although details will be described further below, in this marker detection process, in addition to detection of magnetic marker 30, measurement of a lateral shift amount of a subject point of vehicle 5 with respect to magnetic marker 30 is performed.

IMU 22 (FIG. 4) is an inertial navigation unit which estimates a relative position of vehicle 5 by inertial navigation. IMU 22 includes biaxial magnetic sensor 221 as an electronic compass which measures an azimuth, biaxial acceleration sensor 222 which measures acceleration, and biaxial gyro sensor 223 which measures angular velocity about a yaw axis. Here, the yaw axis is an axis in a vertical direction. IMU 22 calculates a displacement amount by double integration of measured acceleration, and also calculates the azimuth of vehicle 5 by integration of measured angular velocity. The displacement amount and azimuth obtained by IMU 22 by calculation is inputted to positioning unit 12.

(3) Tag Reader

Tag reader 13 (FIG. 4) is a communication unit which wirelessly communicates with RFID tag 35 attached at the end face of magnetic marker 30. Tag reader 13 wirelessly transmits electric power required for operation of RFID tag 35, and receives position data transmitted from RFID tag 35. This position data, which is one example of marker position information, is data indicating the laying position (absolute position) of corresponding magnetic marker 30.

(4) Positioning Unit

Positioning unit 12 (FIG. 4) is a unit which controls sensor unit 2 and tag reader 13 and identifies the own vehicle position, which is the position of a subject point set with respect to vehicle 5 (which is referred to as a subject point of the vehicle, as appropriate) in real time. Positioning unit 12 inputs the own vehicle position to traveling control unit 11 which controls traveling of vehicle 5.

Positioning unit 12 includes an electronic substrate (omitted in the drawing) having implemented thereon a CPU which performs various computations, memory elements such as a ROM and a RAM, and so forth. A method of identifying the own vehicle position by positioning unit 12 varies depending on a case when vehicle 5 reaches magnetic marker 30 or a case when vehicle 5 is positioned in an intermediate position between adjacent magnetic markers 30. Although details will be described further below, in the former case, positioning unit 12 estimates the own vehicle position based on the position data (marker position information) received from RFID tag 35. On the other hand, in the latter case, the own vehicle position is identified based on the relative position of vehicle 5 estimated by inertial navigation.

(5) Traveling Control Unit

Traveling control unit 11 (FIG. 4) is a unit which controls vehicle 5 to achieve automatic driving to, for example, a destination set by a driver. Traveling control unit 11 includes route data generating part 111 which generates route data indicating the target route, vehicle control part 112 which control vehicle 5, subject-point selection processing part 113 which selects a subject point to be set with respect to vehicle 5, and subject-point updating processing part 114 which updates a subject point as a control subject.

To traveling control unit 11, map database (map DB) 110 having stored therein detailed three-dimensional map data (3D map data) is connected. Furthermore, what are controllably connected in to traveling control unit 11 are steering unit 151, engine throttle 152, brake actuator 153, and so forth.

Traveling control unit 11 includes an electronic substrate having implemented thereon a CPU, memory devices such as a ROM and a RAM, an I/O chip for external input/output, and so forth not depicted. For example, with the CPU executing a program read from the ROM, traveling control unit 11 achieves functions as respective parts 111 to 114 described above. Also, in a storage area of the ROM, data regarding vehicle specifications is stored, such as the vehicle width, which is a lateral-width dimension of vehicle 5; a wheel base, which is an interaxial distance between a front-wheel axis and a rear-wheel axis.

Next, (A) marker detection process, (B) traveling control process, and (C) subject-point selecting process of the present embodiment are described.

(A) Marker Detection Process

The marker detection process is a process to be performed by magnetic sensor array 21. Magnetic sensor array 21 performs, as described above, marker detection process at the frequency of 3 kHz by using magnetic sensors Cn.

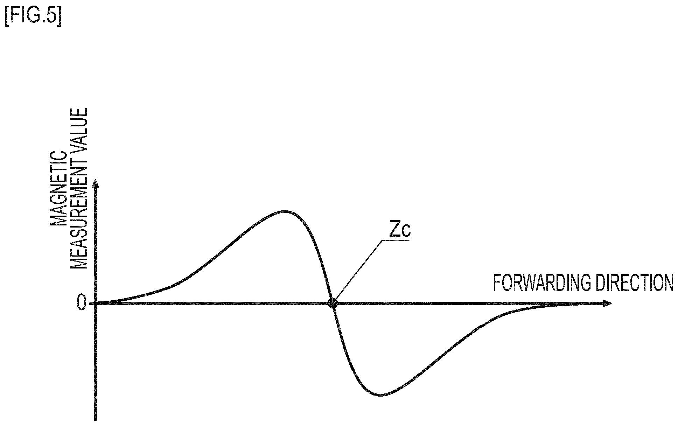

As described above, magnetic sensors Cn can measure magnetic components in the forwarding direction and the vehicle-width direction of vehicle 5. For example, when these magnetic sensors Cn move in the forwarding direction to pass directly above magnetic marker 30, the magnetic measurement value in the forwarding direction has its sign reversed before and after passing magnetic marker 30 as in FIG. 5 and temporally changes so as to cross zero at a position directly above magnetic marker 30. During traveling of vehicle 5, when zero-cross Zc occurs in which the sign of the magnetic measurement value in the forwarding direction detected by any magnetic sensor Cn is reversed, it can be determined that sensor unit 2 (magnetic sensor array 21) is positioned directly above magnetic marker 30. Detection processing circuit 212 determines that magnetic marker 30 is detected when sensor unit 2 is positioned directly above magnetic marker 30 and zero-cross of the magnetic measurement value in the forwarding direction occurs as described above.

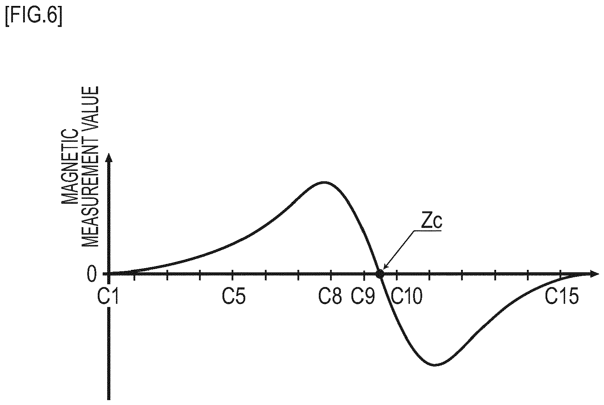

Also, for example, as for a magnetic sensor with the same specification as that of magnetic sensors Cn, a movement along a virtual line in the vehicle-width direction passing directly above magnetic marker 30 is assumed. In this case, the magnetic measurement value in the vehicle-width direction has its sign reversed on both sides across magnetic marker 30 and changes so as to cross zero at a position directly above magnetic marker 30. Therefore, in the case of magnetic sensor array 21 having fifteen magnetic sensors Cn arrayed in the vehicle-width direction, the sign of the magnetic measurement value in the vehicle-width direction to be detected by magnetic sensor Cn varies depending on which side the magnetic sensor is present with respect to magnetic marker 30 (FIG. 6).

In a distribution of FIG. 6 exemplarily depicting magnetic measurement values in the vehicle-width direction of each of magnetic sensors Cn, zero-cross Zc where the sign of the magnetic measurement value in the vehicle-width direction is reversed appears so as to correspond to magnetic marker 30. The position of zero-cross Zc in the distribution of the drawing represents the position of magnetic marker 30 in the vehicle-width direction. The position of magnetic marker 30 in the vehicle-width direction can be identified as, for example, an intermediate position between adjacent two magnetic sensors Cn across zero-cross Zc or a position directly below magnetic sensor Cn in which its magnetic measurement value in the vehicle-width direction is zero and the signs of magnetic sensors Cn on both outer sides are reversed.

Detection processing circuit 212 measures a deviation of the subject point of vehicle 5 in the vehicle-width direction with respect to magnetic marker 30 as the lateral shift amount. For example, when the center of vehicle 5 in the vehicle-width direction is selected as a subject point, the position of magnetic sensor C8 at the center of sensor unit 2 is the subject point. For example, in the case of FIG. 6, the position of zero-cross Zc corresponding to magnetic marker 30 is a position corresponding to C9.5 in the neighborhood of a midpoint between C9 and C10. As described above, since the pitch between magnetic sensors C9 and C10 is 10 cm, the lateral shift amount of the subject point (magnetic sensor C8) of vehicle 5 with respect to magnetic marker 30 is $(9.5-8)\times10=15$ cm. The example in the drawing is an example when vehicle 5 is shifted leftward in the lane. Note that the sign of the lateral shift amount is set so that the sign is positive when the subject point of the vehicle is shifted leftward with respect to magnetic marker 30 and negative when it is shifted rightward.

(B) Traveling Control Process

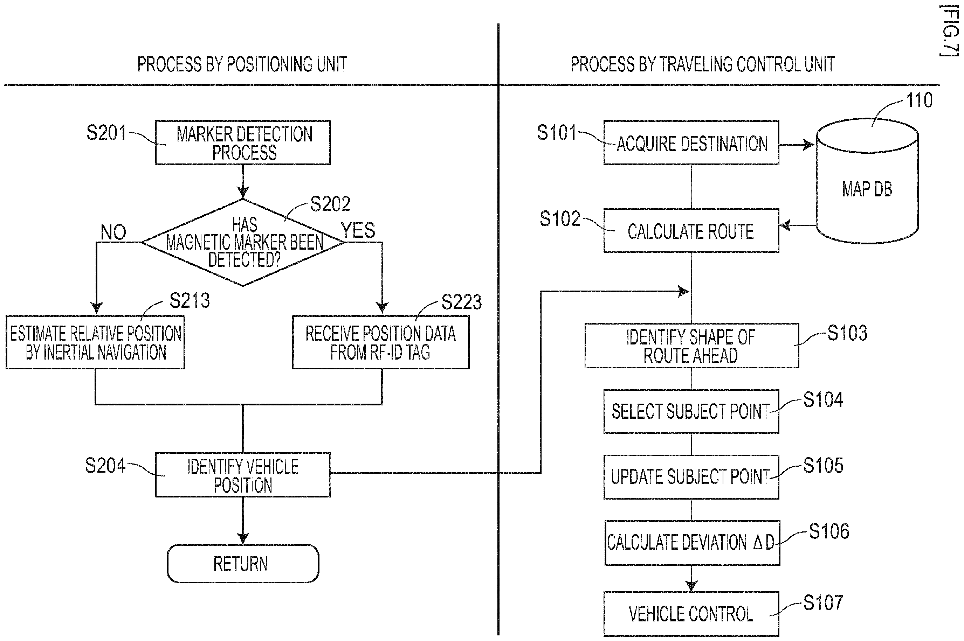

Next, an entire operation of automatic driving system 1 is described with reference to FIG. 7 and others.

In automatic driving system 1, the driver can set a destination by using, for example, a vehicle onboard monitor such as a touch panel, a voice input system, or the like. Upon obtaining the destination inputted by the driver (S101), traveling control unit 11 refers to the 3D map data stored in map DB 110 to perform route calculation for generation of route data (S102).

Here, the route data is data representing target route 1R for letting the subject point of vehicle 5 pass at the time of automatic driving control. For example, as target route 1R exemplarily depicted in FIG. 8, the route data is a series of data of center locations (absolute positions) of lane 300. In the configuration of the present embodiment, magnetic markers 30 are arrayed along the center of lane 300. Therefore, target route 1R represented by the route data matches a laying line of magnetic markers 30.

In automatic driving control, vehicle 5 is controlled so that the subject point of vehicle 5 passes through target route 1R (predetermined route). Note that the subject point of vehicle 5 is updated as occasion arises during automatic driving control. The own vehicle position in the following description means an absolute position of the subject point being set.

During automatic driving control, positioning unit 12 controls sensor unit 2 to cause the above-described marker detection process to be repeatedly performed (S201). If magnetic marker 30 has been detected (S202: YES), positioning unit 12 obtains the lateral shift amount of the subject point with respect to that magnetic marker 30 and also obtains marker position information (position data) of RFID tag 35 (S223).

Positioning unit 12 identifies, as the own vehicle position (exemplarily indicated by a ∆ mark in FIG. 8), a position offset by the lateral shift amount with reference to the laying position of magnetic marker 30 indicated by the position data (S204). Here, the above-described lateral shift amount is the lateral shift amount of the subject point of vehicle 5 with respect to magnetic marker 30. Also, the own vehicle position is the absolute position of the subject point of vehicle 5.

On the other hand, when vehicle 5 is positioned in the intermediate position between adjacent magnetic markers 30 and any magnetic marker 30 cannot be detected (S202: NO), positioning unit 12 estimates a relative position of vehicle 5 with respect to the latest own vehicle position identified at the time of detection of magnetic marker 30 (position indicated by the ∆ mark in FIG. 8). Specifically, positioning unit 12 estimates the above-described relative position by integration of displacement amounts similarly taken in along the azimuths of vehicle 5 taken in from IMU 22.

As exemplarily depicted in FIG. 8, positioning unit 12 identifies the position of a x mark obtained by shifting the position by this relative position to the latest own vehicle position (position indicated by the ∆ mark in FIG. 8), identified at the time of detection of magnetic marker 30, as the own vehicle position. Note that an arrow in the drawing is one example of a vector representing this relative position. Here, as described above, the own vehicle position with the ∆ mark in the drawing is the absolute position of the subject point of vehicle 5. And, the own vehicle position with the × mark obtained by shifting by the relative position to the own vehicle position with the ∆ mark in the drawing is also the absolute position of the subject point of vehicle 5. Positioning unit 12 inputs the identified own vehicle position (the position with the ∆ mark or the × mark in FIG. 8) to traveling control unit 11.

Upon obtaining the own vehicle position, traveling control unit 11 identifies the own vehicle position in target route 1R. Then, traveling control unit 11 identifies the shape of the route ahead of vehicle 5 (S103). Traveling control unit 11 identifies, for example, a curvature of a curve ahead or the like as a route specification, which is a shape specification of the route of vehicle 5 ahead. Here, the shape of the route ahead means a route shape several meters ahead of vehicle 5. Note that, in place of the one several meters ahead, the route shape may be a route shape at a location several tens of meters ahead or at a location vehicle 5 has reached (zero meter ahead). For example, if the route shape has been identified before a location, its route shape may be identified when it is estimated to have reached at that location.

By using route specifications and the vehicle specifications stored in the ROM, traveling control unit 11 selects a new subject point (S104, subject-point selection process). In this subject-point selection process, for example, a position having reflected thereon a route specification such as the curvature of a curve, and a vehicle specification such as the vehicle width or wheel base is selected as a new subject point. Note that a new subject point may be selected in consideration of only either one of the route specification and the vehicle specification. Note that details of the subject-point selection process will be described further below.

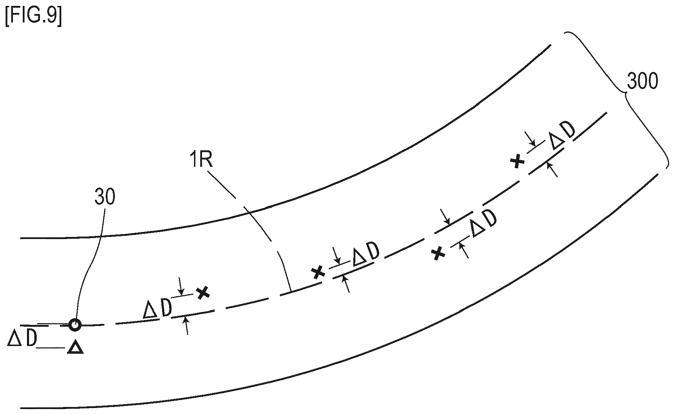

Traveling control unit 11 updates the subject point as a control subject with the subject point newly selected at step S104 (S105, subject-point updating process). Then, for the newly updated subject point, as in FIG. 9, traveling control unit 11 calculates deviation ∆D from target route 1R (S106). Then, traveling control unit 11 performs vehicle control such as steering control and throttle control so that this deviation ∆D becomes closer to zero, thereby achieving automatic driving (S107).

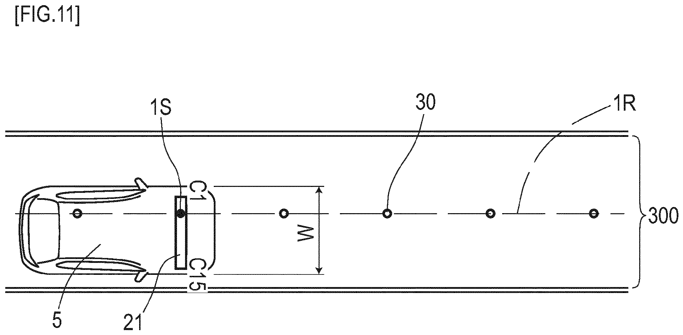

Here, target route 1R represented by the route data of the present embodiment indicates a position at the center of lane 300 forming a traveling route, that is, a position on the laying line of magnetic markers 30. For example, if the position of magnetic sensor C8 corresponding to the center in the vehicle-width direction is set as subject point 1S, as in FIG. 10, vehicle 5 is controlled so as to travel along the center of lane 300. Also, for example, if the position of leftward magnetic sensor C3 is set as subject point 1S, as in FIG. 11, the vehicle is controlled so as to travel rightward in lane 300.

(C) Subject-Point Selection Process

The subject-point selection process at step S104 in FIG. 7 is a process for selecting the subject point of vehicle 5. In the subject-point selection process of the present embodiment, any position on the straight line where fifteen magnetic sensors C1 to C15 (Cn) are arrayed is selected as the subject point. The subject point may be an intermediate position between adjacent magnetic sensors, for example, C9.5 or the like. In the following description, the position of the subject point is represented as the position of magnetic sensor C8, the position of magnetic sensor C2, or the like.

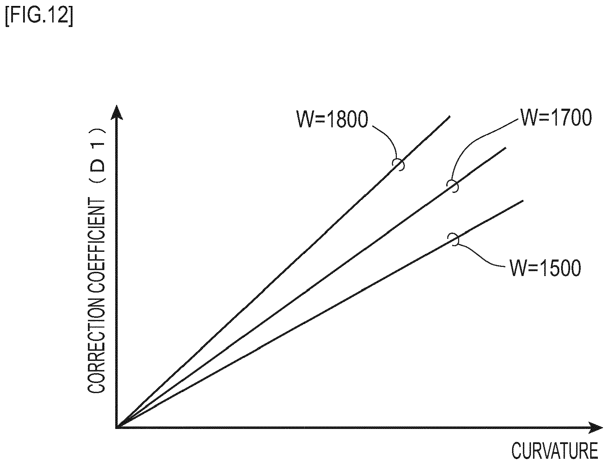

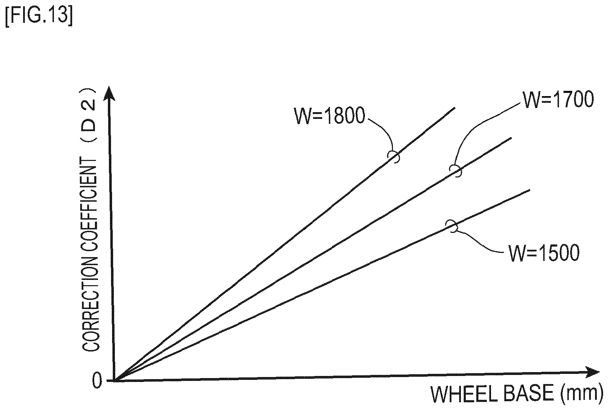

In automatic driving system 1 of the present embodiment, correction coefficients (FIG. 12, FIG. 13) to be applied to the subject-point selection process are defined. Correction coefficient D1 of FIG. 12 is a correction coefficient in accordance with the curvature of a curve (one example of a route specification) . Correction coefficient D2 of FIG. 13 is a correction coefficient in accordance with the wheel base (one example of a vehicle specification). Note that as in FIG. 12 and FIG. 13, the values of correction coefficients D1 and D2 increase as vehicle width W is larger. This is because the necessity to correct the subject point increases as vehicle width W is larger.

In the subject-point selection process, for example, a new subject point is selected by solving the following Equation 1.

[Equation 1]

$$(\text{new subject point}) = (\text{initially-set subject point}) \pm (D1 \times D2)$$

The initially-set subject point in Equation 1 is a subject point suitable for, for example, a straight road. For example, the position of magnetic sensor C8 corresponding to the center of vehicle 5 is set. When the position of magnetic sensor C8 is the initially-set subject point, the value (initially-set subject point) in Equation 1 is 8. Also, for example, when a value of 3 is calculated (as new subject point) by Equation 1, the position of magnetic sensor C3 is selected as a new subject point.

In Equation 1, "±" for switching whether the correction amount (D1×D2) is added to or subtracted from the initially-set subject point is defined depending on a left curve or right curve. In the case of a left curve, in consideration of the inner wheel difference, vehicle 5 is required to be pulled to the right in the lane. Thus, in the case of a left curve, the correction amount is preferably subtracted from the initially-set subject point so as to allow a leftward subject point to be selected. In this case, the above-described Equation 1 is (initially-set subject point)-(D1×D2). On the other hand, in the case of a right curve, in consideration of the inner wheel difference, vehicle 5 is required to be pulled to the left in the lane. Thus, in the case of a right curve, the correction amount is preferably added to the initially-set subject point so as to allow a rightward subject point to be selected. In this case, the above-described Equation 1 is (initially-set subject point)+(D1×D2).

According to the above-described Equation 1, an appropriate subject point can be calculated in accordance with whether the route ahead (several meters ahead) is straight or curved. For example, when the route ahead is in a straight line, the curvature is approximately zero, and correction coefficient D1 is thus approximately zero. Therefore, when the route ahead is in a straight line, irrespective of the value of correction coefficient D2, the correction amount is approximately zero, and a subject point positioned close to the initially-set subject point is selected. On the other hand, when the route ahead is curved, correction coefficient D1 has a large value, and the correction amount becomes a large amount. With this, a subject point positioned away from the initially-set subject point is selected.

In this manner, the subject-point selection process with Equation 1 described above is a process in which correction of the subject point is not performed when the route ahead is in a straight line and the degree of correction of the subject point is intensified when the curvature of the curve ahead is large. Note that the degree of correction varies also depending on vehicle width W. As vehicle width W is larger, correction coefficients D1 and D2 increase (refer to FIG. 12 and FIG. 13) and thus the degree of correction is intensified.

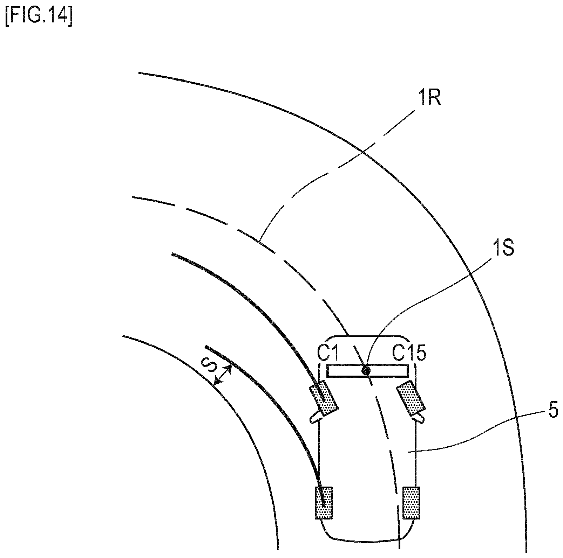

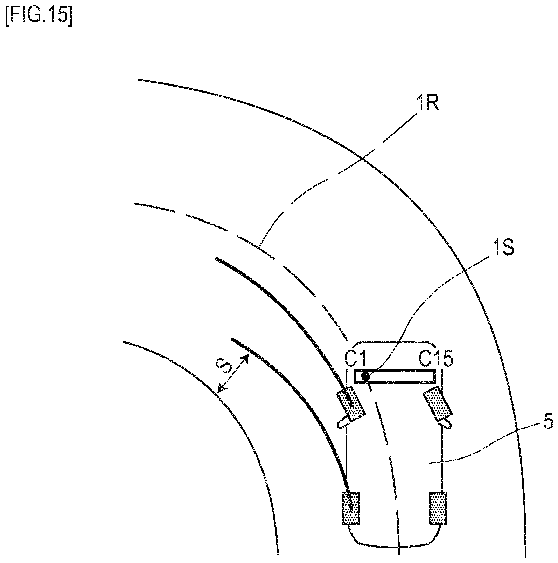

Here, the significance of correction of the subject point is described by taking, as an example, a case in which vehicle 5 passes through a tight left curve. FIG. 14 depicts an inner wheel difference occurring at the time of passing through a tight left curve, with the subject point being still set at the position of magnetic sensor C8. When the vehicle travels through the tight left curve, with the subject point being still set at the position of magnetic sensor C8 suitable for a straight road, the left rear wheel is pulled inward too much due to the inner wheel difference, and inner space S of the curve becomes insufficient. On the other hand, as in FIG. 15, when the position of leftward magnetic sensor C2 is set as the subject point, vehicle 5 can travel with a large rightward turn in the lane of the left curve. In this case, the left rear wheel is not pulled inward too much, and inner space S of the curve can be sufficiently ensured.

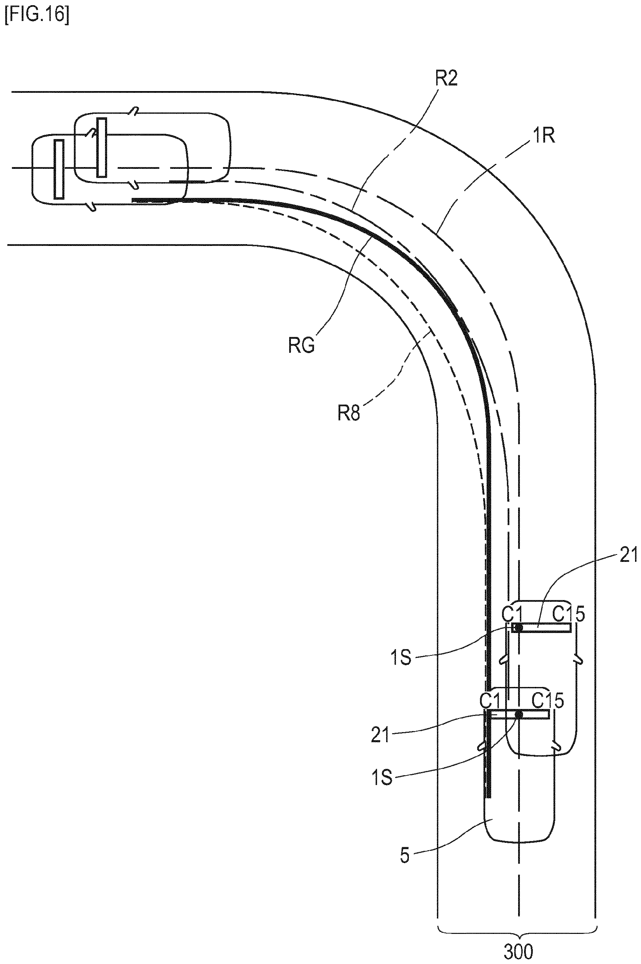

In the subject-point selection process with Equation 1 described above, when the road is a straight road, for example, a point near the position of magnetic sensor C8, which is the initially-set subject position, is selected as a subject point. On the other hand, when the road is a left curve, a subject point leftward of the position of magnetic sensor C8 is selected by correction. When vehicle 5 passes through a route of FIG. 16 via a straight-line zone to enter a left-curve zone, first in the straight-line zone, the position of magnetic sensor C8 is selected as a subject point. In the following curve zone, a leftward position, such as that of magnetic sensor C2, is selected as a subject point. If the position of center magnetic sensor C8 is selected as a subject point in the straight-line zone, the position of vehicle 5 does not lean in the lane. If a leftward subject point, for example, magnetic sensor C2, is selected in the curve zone, the left rear wheel on the inner side of the curve is not pulled inward too much.

If a subject point is selected by the subject-point selection process with Equation 1 described above in the above-described manner, while the position of vehicle 5 in the lane going straight ahead is appropriately held, the path of the left rear wheel on the inner side of the curve can be made favorable. Path RG of the left rear wheel of vehicle 5 is, as in FIG. 16, a favorable path with a portion corresponding to the straight-line zone of path R8 of the left rear wheel when the subject point is at the position of magnetic sensor C8 and a portion corresponding to the curve zone of path R2 of the left rear wheel when the subject point is at the position of magnetic sensor C2 in combination.

Also, in the subject-point selection process of the present embodiment, as the wheel base is longer, correction coefficient D2 (FIG. 13) is larger. According to this correction coefficient D2, the degree of correction of the subject point can be intensified for a large-sized vehicle having a long wheel base more than a small-sized vehicle. With this, the traveling route when a large-sized vehicle having a larger inner wheel difference than that of a small-sized vehicle passes through a tight curve can be made as a larger turn, and the path of the rear wheel on the inner side of the curve can be made favorable.

As described above, automatic driving system 1 of the present embodiment is a system which lets vehicle 5 travel by automatic steering so that the subject point of vehicle 5 passes through target route 1R. Automatic driving system 1 has one of technical features in selecting a subject point as a control subject and updating it as occasion arises.

In automatic driving system 1, by updating the subject point as a control subject, the route where vehicle 5 actually travels can be adjusted. In this automatic driving system 1, in adjusting the actual traveling route of vehicle 5, it is less necessary to change the control specifications and the target route. Automatic driving system 1 can adjust the actual traveling route of vehicle 5 without changing the control specifications and the target route, and can be applied with high versatility to various vehicle types and traveling roads.

Note that the curvature of the curve is exemplarily described as a route specification in the present embodiment. The lane width and the type of the lane may be included in route specifications. This is because it is more required to control the position of the vehicle on the lane with high accuracy as the lane width is narrower. As the type of the lane, there are types such as an expressway or ordinary road; an outer lane or inner lane of two lanes on one side, and so forth.

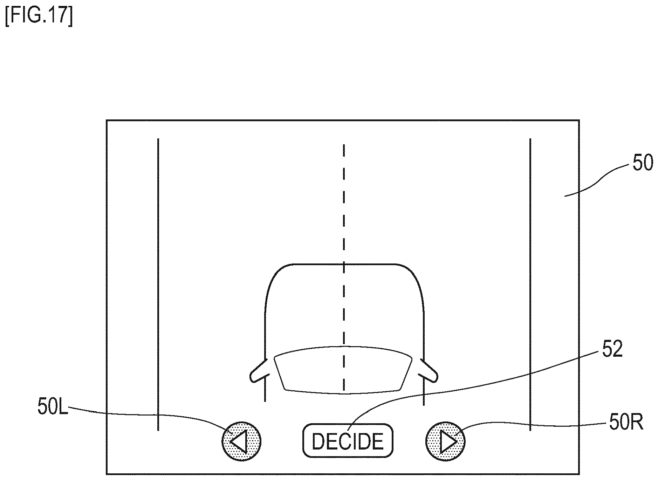

Note that while the position of vehicle 5 in the lane is generally at the center, a driver who prefers a leftward or rightward position is present. Thus, setting screen 50 (FIG. 17) which allows the driver to set a preference in the vehicle position in the lane may be displayed on a vehicle onboard monitor. In this setting screen 50, the vehicle position can be adjusted by using right-oriented triangular mark 50R and left-oriented triangular mark 50L, and a preferred vehicle position can be set in accordance with operation on decision button 52. The position of the subject point is preferably corrected in accordance with the preferred position of a touch vehicle set by using setting screen 50. The vehicle onboard monitor in this configuration forms one example of an operating part to be operated by the driver to adjust the position in the traveling road occupied by the vehicle in the vehicle-width direction. Traveling control unit 11 as a subject-point selection processing part preferably adjusts the subject point leftward (rightward) when, for example, a leftward (rightward) position is selected by driver's operation on the operating part. As this adjustment, it is possible to adopt, for example, shifting the subject point selected by the above-described subject-point selection process by a predetermined amount, adjustment of shifting the initially-set subject point in Equation 1 described above by a predetermined amount, and so forth.

Furthermore, a driver-preferred position of the vehicle may be learnt from the position of the vehicle during manual driving or the like. Furthermore, a driver-preferred position of the vehicle may be learnt by differentiation for each road type. In this case, the traveling control unit can finely select a subject point by using the results of learning the driver's preference for each road type. If a subject point is selected in accordance with the drive in this manner, the traveling route of vehicle 5 by automatic driving can be made closer to the traveling route when the driver drives, thereby reducing a sense of incongruity the driver can feel during automatic driving.

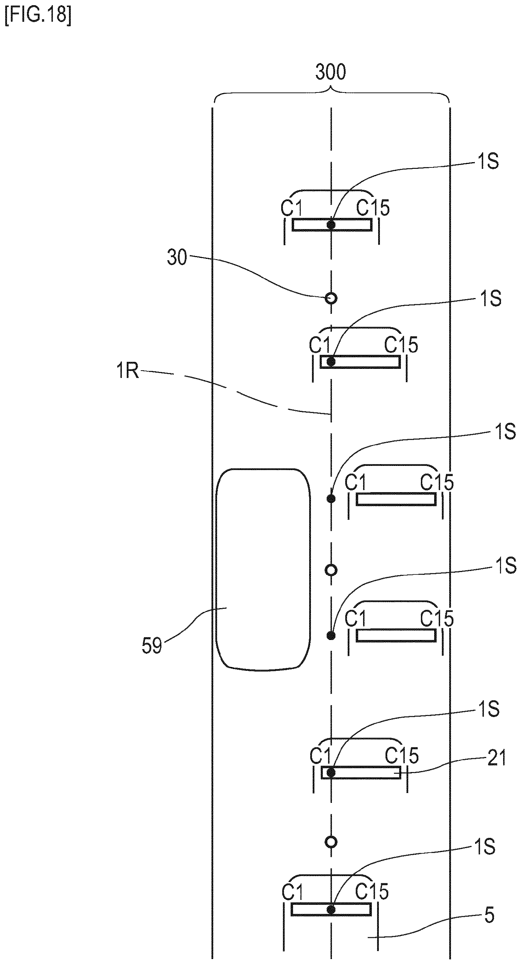

In the present embodiment, the configuration is exemplarily described in which any position on the straight line where fifteen magnetic sensors Cn are arrayed is selected as a vehicle subject point. In place of this configuration, a subject point may be two-dimensionally selected in a horizontal plane parallel to the road surface. In this case, a subject point may be selected irrespective of the inside or outside of the vehicle. For example, as in FIG. 18, when another vehicle 59 is parked overhanging into the traveling road forming target route 1R, subject point 1S can be selected outside vehicle 5. In this case, it is possible to avoid parked vehicle 59 by normal automatic driving control without switching to special control for avoiding parked vehicle 59. For example, if a subject point is selected outside vehicle 5 by the subject-point selection process, it is possible to make a lane change for overtaking and passing a preceding vehicle traveling on the lane of target route 1R, and so forth.

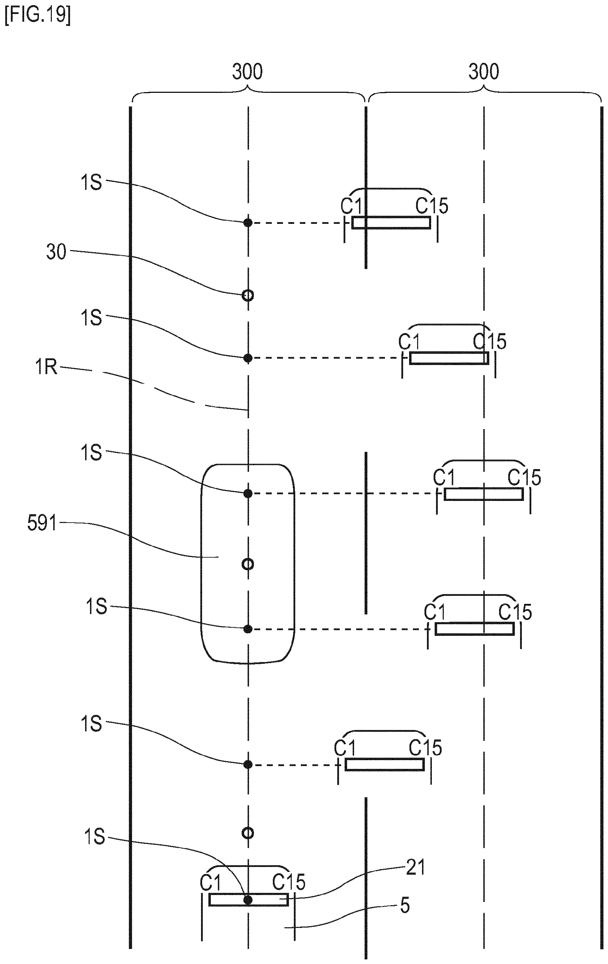

According to the configuration of the present embodiment, by selecting subject point 1S as a control subject, it is possible to perform control for avoiding an obstacle on target route 1R, control for making a lane change, and so forth. In this case, if subject point 1S positioned outside vehicle 5 is selected, it is possible to perform lateral control with a displacement amount in a lateral direction as exceeding the vehicle width or a half of the vehicle width. For example, as in FIG. 19, when a lane change is made to avoid an obstacle such as preceding vehicle 591 on the route, subject point 1S as a control subject can be positioned as overlapping preceding vehicle 591 or positioned on another lane 300 adjacent to lane 300 where vehicle 5 is positioned. By selecting subject point 1S as a control subject in the above-described manner, lateral control over vehicle 5 can be achieved.

Note that in place of or in addition to correction coefficient D1 (FIG. 12), correction coefficient D3 may be adopted, the value of which increases in accordance with the steering angle of the wheel to be steered. When correction coefficient D3 is adopted in addition to correction coefficient D1, a new subject point can be selected by solving the following Equation 2.

[Equation 2]

$$(\text{New subject point}) = (\text{initially-set subject point}) \pm (D1 \times D2 \times D3)$$

In the foregoing, specific examples of the present invention are described in detail as in the embodiments, these specific examples merely disclose examples of technology included in the scope of the claims. Needless to say, the scope of the claims should not be restrictively construed based on the configuration, numerical values, and so forth of the specific examples. The scope of the claims includes technologies acquired by variously modifying, changing, or combining as appropriate the above-described specific examples by using known technologies, knowledge of a person skilled in the art, and so forth.

REFERENCE SIGNS LIST

| | |
|---|---|
| 1 | automatic driving system (control system) |
| 1R | target route (predetermined route) |
| 1S | subject point |
| 11 | traveling control unit |
| 12 | positioning unit |
| 13 | tag reader |
| 110 | map database (map DB) |
| 111 | route data generating part |
| 112 | vehicle control part |
| 113 | subject-point selection processing part |
| 114 | subject-point updating processing part |
| 2 | sensor unit |
| 21 | magnetic sensor array |
| 212 | detection processing circuit |
| 22 | IMU |
| 30 | magnetic marker |
| 35 | RFID tag |
| 5 | vehicle |

**Claims**

1. A vehicular control method for letting a vehicle travel by automatic steering, the control method executing:

   a traveling control process of controlling the vehicle so that a subject point set for the vehicle passes through a predetermined route;
   a subject-point selection process of selecting a new subject point set as the subject point; and
   a subj ect-point updating process of updating the subject point as a control subject of the traveling control process to the new subject point selected by the subject-point selection process.

2. The vehicular control method in claim 1, wherein the subject-point selection process is a process of selecting, as the new subject point, a position having reflected thereon at least either one of a route specification, which is a shape specification of the predetermined route, and a vehicle specification, which is a specification of the vehicle.

3. The vehicular control method in claim 1 or 2, wherein the subject-point selection process is a process of selecting the new subject point by correcting an initially-set position of the subject point, and
a correction amount of the initially-set position of the subject point by the subject-point selection process is an amount obtained by multiplying correction coefficient D1 representing a route specification, which is a shape specification of the predetermined route, and correction coefficient D2 representing a vehicle specification, which is a specification of the vehicle.

4. The vehicular control method in claim 3, wherein the correction coefficient D1 is a correction coefficient in accordance with a curvature of the predetermined route, and the correction coefficient D2 is a correction coefficient in proportion to a wheel base of the vehicle.

5. The vehicular control method in claim 3 or 4, wherein the correction coefficient D1 is a coefficient which becomes zero when the predetermined route is a straight road.

6. The vehicular control method in any one of claims 3 to 5, wherein the correction coefficient D1 is a coefficient which varies in accordance with a lane width and a lane type.

7. The vehicular control method in any one of claims 3 to 6, wherein the correction coefficient D2 is a coefficient which varies in accordance with a vehicle width.

8. The vehicular control method in any one of claims 1 to 7, wherein the subject-point selection process can select the new subject point to avoid an obstacle on the predetermined route or change the lane during traveling.

9. The vehicular control method in claim 8, wherein the subject-point selection process can select a position outside the vehicle as the new subject point.

10. The vehicular control method in any one of claims 1 to 9, wherein the subject-point selection process selects the new subject point by learning, during driving of the vehicle by a driver, a position of the vehicle preferred by the driver and using the result of learning the position of the vehicle.

11. A vehicular control system for letting a vehicle travel by automatic steering, the control system comprising:

a vehicle control part which controls the vehicle so that a subject point set for the vehicle passes through a predetermined route;
a subject-point selection processing part which selects a new subject point set as the subject point; and
a subject-point updating processing part which updates the subject point as a control subject of the vehicle control part to the new subject point selected by the subject-point selection processing part.

12. The vehicular control system in claim 11, wherein the subject-point selection processing part selects, as the new subject point, a position having reflected thereon at least either one of a route specification, which is a shape specification of a traveling route where the vehicle travels, and a vehicle specification, which is a specification of the vehicle.

13. The vehicular control system in claim 11 or 12, comprising an operating part to be operated by a driver to adjust a position of the vehicle in a vehicle-width direction on a traveling road, wherein the subject-point selection processing part corrects a position of the new subject point in accordance with operation by the driver on the operating part.

[FIG.1]

[FIG.2]

[FIG.3]

[FIG.4]

[FIG.5]

[FIG.6]

[FIG.7]

EP 3 989 199 A1

PROCESS BY POSITIONING UNIT

PROCESS BY TRAVELING CONTROL UNIT

S201 — MARKER DETECTION PROCESS

S202 — HAS MAGNETIC MARKER BEEN DETECTED?

NO

YES

S213 — ESTIMATE RELATIVE POSITION BY INERTIAL NAVIGATION

S223 — RECEIVE POSITION DATA FROM RF-ID TAG

S204 — IDENTIFY VEHICLE POSITION

RETURN

S101 — ACQUIRE DESTINATION

110

MAP DB

S102 — CALCULATE ROUTE

IDENTIFY SHAPE OF ROUTE AHEAD — S103

SELECT SUBJECT POINT — S104

UPDATE SUBJECT POINT — S105

CALCULATE DEVIATION $\Delta D$ — S106

VEHICLE CONTROL — S107

[FIG.8]

VECTOR REPRESENTING RELATIVE POSITION

[FIG.9]

[FIG.10]

[FIG.11]

[FIG.12]

[FIG.13]

[FIG.14]

[FIG.15]

[FIG.16]

[FIG.17]

[FIG.18]

[FIG.19]

**EP 3 989 199 A1**

<table>
<tr><td align="center"><strong>INTERNATIONAL SEARCH REPORT</strong></td><td>International application No.<br>PCT/JP2020/024003</td></tr>
</table>

A. CLASSIFICATION OF SUBJECT MATTER
G08G 1/00(2006.01)i
FI: G08G1/00 X

According to International Patent Classification (IPC) or to both national classification and IPC

B. FIELDS SEARCHED

Minimum documentation searched (classification system followed by classification symbols)
B60W10/00-10/30; B60W30/00-99/00; G08G1/00-99/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-52412 A (DENSO CORP.) 16.03.2017 (2017-03-16) claim 1, paragraphs [0020]-[0030] | 1-2, 8-9, 11-12 |
| A | entire text, all drawings | 3-7, 10, 13 |
| A | JP 9-282033 A (TOYOTA MOTOR CORP.) 31.10.1997 (1997-10-31) entire text, all drawings | 1-13 |
| A | JP 2001-1922 A (MAZDA MOTOR CORPORATION) 09.01.2001 (2001-01-09) entire text, all drawings | 1-13 |
| A | WO 2017/199751 A1 (HONDA MOTOR CO., LTD.) 23.11.2017 (2017-11-23) entire text, all drawings | 1-13 |
| A | WO 2017/159493 A1 (HONDA MOTOR CO., LTD.) 21.09.2017 (2017-09-21) entire text, all drawings | 1-13 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 August 2020 (26.08.2020) | 08 September 2020 (08.09.2020) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

31

**EP 3 989 199 A1**

INTERNATIONAL SEARCH REPORT
Information on patent family members

International application No.

PCT/JP2020/024003

| Patent Documents referred in the Report | Publication Date | Patent Family | Publication Date |
|---|---|---|---|
| JP 2017-52412 A | 16 Mar. 2017 | (Family: none) | |
| JP 9-282033 A | 31 Oct. 1997 | (Family: none) | |
| JP 2001-1922 A | 09 Jan. 2001 | (Family: none) | |
| WO 2017/199751 A1 | 23 Nov. 2017 | US 2019/0155293 A1 CN 109154820 A | |
| WO 2017/159493 A1 | 21 Sep. 2017 | CN 108698592 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001264076 A